Europäisches Patentamt

European Patent Office

Office européen des brevets

(11) Veröffentlichungsnummer: **0 200 812 B1**

# EUROPÄISCHE PATENTSCHRIFT

(45) Veröffentlichungstag der Patentschrift: 03.04.91

(51) Int. Cl.⁵: **B62D 43/10**

(21) Anmeldenummer: 85111857.0

(22) Anmeldetag: 19.09.85

(54) Reserveradabdeckung in Kraftfahrzeugen.

(30) Priorität: 06.05.85 DE 3516157

(43) Veröffentlichungstag der Anmeldung:
12.11.86 Patentblatt 86/46

(45) Bekanntmachung des Hinweises auf die
Patenterteilung:
03.04.91 Patentblatt 91/14

(84) Benannte Vertragsstaaten:
DE FR GB IT SE

(56) Entgegenhaltungen:
DE-A- 2 021 891
GB-A- 2 081 657
US-A- 2 108 145
US-A- 2 244 872

(73) Patentinhaber: FORD-WERKE AKTIENGESELL-
SCHAFT
Ottoplatz 2 Postfach 21 03 69
W-5000 Köln 21(DE)DE IT SE

Patentinhaber: FORD MOTOR COMPANY LI-
MITED
Eagle Way
Brentwood Essex CM13 3BW(GB)GB

Patentinhaber: FORD FRANCE SOCIETE ANO-
NYME
344 Avenue Napoléon Bonaparte B.P. 307
F-92506 Rueil Malmaison Cedex(FR)FR

(72) Erfinder: Mahr, Josef
Karl-Arnold-Strasse 34
W-5000 Köln 91(DE)

(74) Vertreter: Messulam, Alec Moses et al
A. Messulam & Co. 24 Broadway
Leigh on Sea Essex SS9 1BN(GB)

**Beschreibung**

Die Erfindung geht aus von einer Reserveradabdeckung in Kraftfahrzeugen der im Oberbegriff des Patentanspruchs 1 erläuterten Art.

Aus der DE-OS 31 31 205 ist bereits eine Reserveradabdeckung in Kraftfahrzeugen bekannt, bei der ein in einer Reserveradmulde angeordnetes Reserverad von einer Abdeckplatte verdeckt wird, wobei an der Abdeckplatte ein Verankerungsteil angeordnet ist, über das sie in der Nabenbohrung der Felge des Reserverades festlegbar ist.

Die bekannte Reserveradabdeckung weist hierbei den Nachteil auf, daß ihr Verankerungsteil nur mit federnden Armen versehen ist, die lediglich bei Auslegung auf eine Reserverad-Dimension einen ausreichenden Halt gewährleisten können.

Bei in der Großserie gefertigten Fahrzeugmodellen ist es jedoch üblich, daß ein bestimmtes Fahrzeugmodell je nach Motorbestückung und Ausstattungsvariante mit unterschiedlichen Bereifungen geliefert wird, was zur Folge hat, daß das in der Reserveradmulde untergebrachte Reserverad unterschiedliche Abmessungen insbesondere in seiner Breite und in der Höhenlage und Größe seiner Nabenbohrung aufweisen kann.

Die Aufgabe der Erfindung ist es, eine Reserveradabdeckung in Kraftfahrzeugen der im Oberbegriff des Patentanspruchs 1 erläuterten Art derart zu verbessern, daß ein in die Abdeckplatte eingesetztes Halteteil in der Lage ist, die Abdeckplatte auch an Reserverädern unterschiedlicher Dimension sicher und zuverlässig festzulegen. Darüberhinaus soll auch die Lage eines drucklosen Reserverades berücksichtigt werden.

Gemäß der Erfindung wird diese Aufgabe gelöst, indem bei einer Reserveradabdeckung in Kraftfahrzeugen der im Oberbegriff des Patentanspruchs 1 aufgezeigten Art die im Kennzeichenteil des Patentanspruchs 1 aufgezeigten Merkmale angewendet werden.

In den Ansprüchen 2 bis 4 sind zweckmässig Ausgestaltungen der Erfindung näher erläutert.

Dadurch, daß das Verankerungsteil aus einem in die Abdeckplatte eingesetzten, einen oberen Lagerflansch und zwei sich nach unten erstreckende Spreizarme aufweisenden Halteteil und einem in diesem eingesetzten einen oberen Scheibenflansch mit einer Handhabe und einen über einen Steg verbundenen unteren einen ovalen Spreiznocken aufweisenden Riegelteil besteht, über den die Spreizarme in unterschiedlichem Ausmaß aufspreizbar sind, kann durch Verdrehen der Handhabe in unterschiedlichem Ausmaß jeweils ein sicheres Festlegen der Reserveradabdeckung am Reserverad auch bei unterschiedlicher Höhenlage und unterschiedlichem Durchmesser der Nabenbohrung des Reserverades erzielt werden.

Dadurch, daß an den sich nach unten erstreckenden Spreizarmen nach innen vorspringende Konsolen vorgesehen sind, an denen Führungszapfen hochragen, die mit am Spreiznocken vorgesehenen nockenförmigen Führungsnuten zusammenwirken, kann eine einfache Montage des Halteteiles und des Riegelteiles erfolgen.

Dadurch, daß in den nockenförmigen Führungsnuten mehrere Rastmulden vorgesehen sind, kann der Riegelteil in unterschiedlichen Spreizlagen festgelegt werden.

Die Erfindung wird anhand eines in den beiliegenden Zeichnungen gezeigten Ausführungsbeispieles erläutert.

Es zeigt:

Fig. 1    einen vertikalen Schnitt durch eine Kraftfahrzeugkarosserie im Bereich der Reserveradmulde mit einer Reserveradabdeckung gemäß der Erfindung, wobei eine Reserveradgröße in vollen Linien und mögliche andere Größen in gestrichelten bzw. strichpunktierten Linien gezeigt sind;

Fig. 2    zeigt einen vertikalen Schnitt durch das Halteteil mit eingesetztem Riegelteil;

Fig. 3    eine Draufsicht auf den Halteteil bei entferntem Riegelteil;

Fig. 4    eine Ansicht des Riegelteiles aus der Ebene der Linie IV-IV in Fig. 2 bei Weggelassenem Halteteil;

Fig. 5    eine Seitenansicht des Halteteiles mit den Einrichtungen zum lagerichtigen Einsetzen in die Reserveradabdeckung und

Fig. 6    ein Lochbild der Aufnahmeöffnung für das erfindungsgemäße Halteteil in der Reserveradabdeckung.

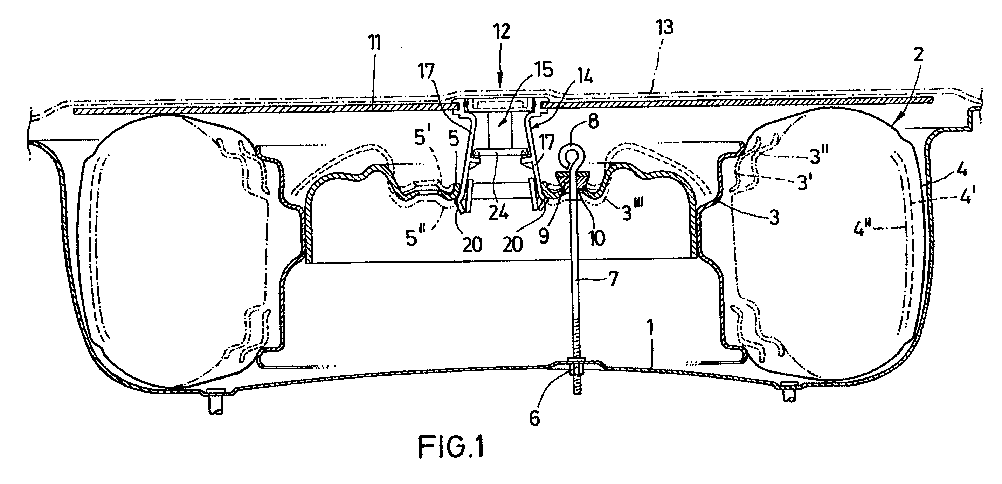

In Fig. 1, die einen vertikalen Schnitt durch eine Kraftfahrzeugkarosserie im Bereich der Reserveradmulde zeigt, ist die Reserveradmulde 1 durch eine schüsselförmige Einprägung, z. B. im Bodenblech der Kraftfahrzeugkarosserie ausgebildet. In der Reserveradmulde 1 ist ein Reserverad 2 in vollen Linien eingezeichnet, das je nach der vorgesehenen Felgengröße 3 bzw. 3' und 3" und der aufgezogenen Bereifung 4 bzw. 4' und 4" sowohl in seinem Durchmesser als auch in seiner Breite unterschiedlich sein kann, wodurch insbesondere die Höhenlage der Nabenbohrung 5, 5' bzw. 5" als auch deren Durchmesser unterschiedlich sein können.

Das Reserverad 2 kann hierbei über eine in die Reserveradmulde 1 eingesetzte Gewindemutter 6, die mit einer Gewindestange 7 mit einer oberen Handhabe 8 und einem Konusstück 9 an einer Radmutterbohrung 10 verspannt und festgelegt werden. Wie hierbei aus der kleingestrichelten Teildarstellung bei 3''' hervorgeht, muß auch berücksichtigt werden, daß ein druckloses Reserverad 2 mit seiner Felge wesentlich tiefer liegt als ein Reserverad mit normalem Betriebsdruck.

Das Reserverad 2 wird durch eine Reserveradabdeckung 11 abgedeckt. die über ein Verankerungsteil 12 in der Nabenbohrung 5 des Reserverades 2 festgelegt wird. Vorzugsweise wird hierbei oberhalb der Reserveradabdeckung 11 noch ein loser Teppichbelag vorgesehen.

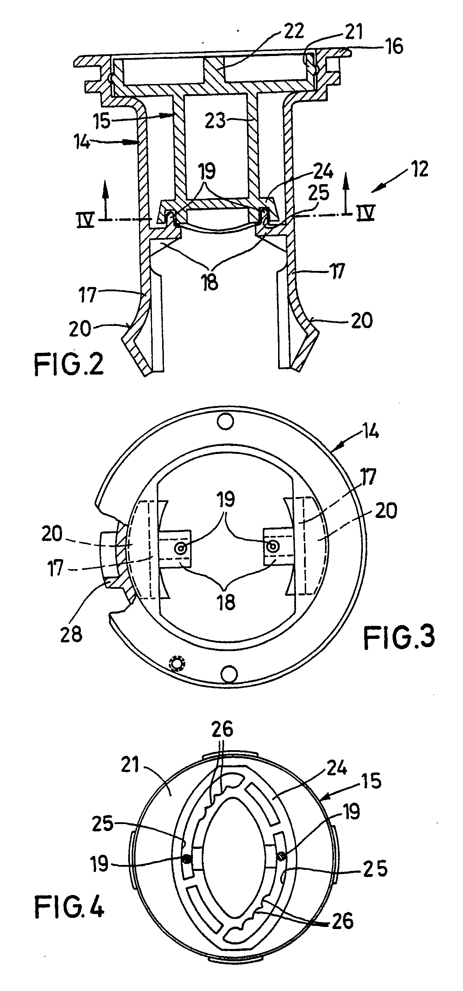

Der aus den Figuren 2 und 3 ersichtliche Verankerungsteil 12 besteht im Wesentlichen aus einem in die Abdeckplatte 11 eingesetzten Halteteil 14 und einem mit diesem zusammenwirkenden Riegelteil 15. Das Halteteil 14 weist hierbei einen oberen Lagerflansch 16 auf, von dem sich zwei Spreizarme 17 nach unten erstrecken. Die Spreizarme 17 weisen nach innen vorspringende Konsolen 18 mit nach oben ragenden Führungszapfen 19 auf und sind an ihren unteren äußeren Enden mit vorspringenden bogenförmigen, konkaven Klemmflächen 20 versehen.

Das Riegelteil 15 ist an seinem oberen Ende mit einem Scheibenflansch 21 mit einer Handhabe 22 versehen, der im Lagerflansch 16 aufgenommen wird. Vom Scheibenflansch 21 erstreckt sich ein im Querschnitt H-förmiger Steg 23 und trägt einen ovalen Spreiznocken 24. Der Spreiznocken 24 ist mit Führungsnuten 25 versehen, die mit den Führungszapfen am Halteteil 14 in Eingriff kommen. Die Führungsnuten 25 sind hierbei an einer Wandseite mit Rastmulden 26 versehen, über die ein Festlegen der Führungszapfen 19 in bestimmten Stellungen möglich ist.

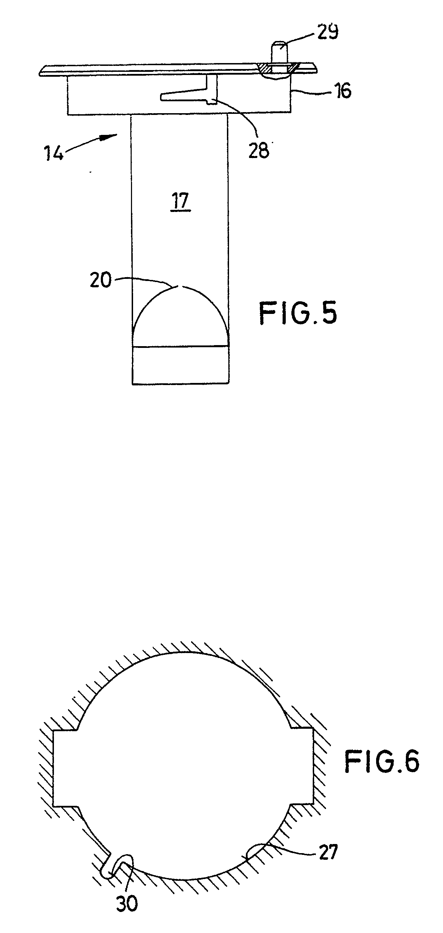

Das Einsetzen des erfindungsgemäßen Verankerungsteiles 12 in die Reserveradabdeckung 11 erfolgt hierbei, wie aus Fig. 6 zu ersehen ist , über eine schlüssellochförmige Öffnung 27, der am Lagerflansch 16 entsprechende Vorsprünge 28 zugeordnet sind. Am Lagerflansch 16 ist hierbei ein Sicherungszapfen 29 mit angespritzt, der nach Verdrehen des Lagerflansches 16 um einen bestimmten Winkelbetrag, wobei die Vorsprünge 28 die Abdeckplatte 11 hintergreifen, durch Eindrücken in eine vorgesehene Ausnehmung 30 in der Abdeckplatte 11 die Lage des Halteteiles 14 fixiert.

## Ansprüche

1. Reserveradabdeckung in Kraftfahrzeugen, bei der ein in einer Reserveradmulde (1) angeordnetes Reserverad (2) von einer Abdeckplatte (11) verdeckt wird, wobei an der Abdeckplatte (11) Verankerungsteil (12) angeordnet wird über das sie in der Nabenbohrung (5) der Felge des Reserverades festlegbar ist, dadurch gekennzeichnet, daß das Verankerungsteil (12) aus einem in die Abdeckplatte (11) eingesetzten, einen oberen Lagerflansch (16) und zwei sich nach unten erstreckende Spreizarme (17) aufweisenden Halteteil (14) und einem in diesen eingesetzten, einen oberen Scheibenflansch (21) mit einer Handhabe (22) und einen über einen Steg (23) verbundenen unteren ovalen Spreiznocken (24) aufweisenden Riegelteil (15) besteht, über den die Spreizarme (17) in unterschiedlichem Ausmaß aufspreizbar sind.

2. Reserveradabdeckung nach Anspruch 1, dadurch gekennzeichnet, daß an den sich nach unten erstreckenden Spreitarmen (17) nach innen vorspringende Konsolen (18) vorgesehen sind, an denen Führungszapfen (19) hochragen, die mit am ovalen Spreiznocken vorgesehenen Führungsnuten (25) zusammenwirken.

3. Reserveradabdeckung nach den Ansprüchen 1 und 2, dadurch gekenn zeichnet, daß in den Führungsnuten (25) am ovalen Spreiznocken (24) an einer Seitenwand mehrere Rastmulden (26) vorgesehen sind, über die das Riegelteil (15) in unterschiedlichen Winkel- bzw. Spreizlagen festlegbar ist.

4. Reserveradabdeckung nach den Ansprüchen 1 bis 3, dadurch gekennzeich net, daß die Spreizarme (17) an ihren unteren Enden mit vorspringenden, bgenförmigen, konkaven Klemmflächen (20) versehen sind.

## Claims

1. A spare wheel cover in motor vehicles, in which a spare wheel (2) disposed in a spare wheel cavity (1) is covered by a cover plate (11), the cover plate (11) having disposed on it a fastening device (12) by means of which it can be secured in the hub bore (5) of the rim of the spare wheel, characterised in that the fastening device (12) consists of a holding part (14) which is inserted into the cover plate (11) and comprises an upper bearing flange (16) and two spreading arms (17) extending downwards, and of a locking part (15) which is inserted into the said holding part (14) and comprises an upper disc flange (21) with a handle (22) and a lower oval spreading cam (24) connected by way of a web (23) and by way of which the spreading arms (17) can be spread to different degrees.

2.  A spare wheel cover according to Claim 1, characterised in that on the downwardly extending spreading arms (17) inwardly projecting brackets (18) are provided on which guide pins (19) project upwards and cooperate with guide grooves (25) provided on the oval spreading cam.

3.  A spare wheel cover according to Claims 1 and 2, characterised in that a plurality of engaging recesses (26), by way of which the locking part (15) can be secured in different angular or spread positions, are provided on one side wall of the guide grooves (25) on the oval spreading cam (24).

4.  A spare wheel cover according to Claims 1 to 3, characterised in that the spreading arms (17) are provided at their lower ends with projecting, curved, concave clamping surfaces (20).

**Revendications**

1.  Dispositif de recouvrement pour la roue de secours dans des véhicules automobiles, dans lequel une roue de secours (2) disposée dans une cuvette (1) destinée à la roue de secours est recouverte par une plaque de recouvrement (11), un dispositif d'ancrage (12) étant disposé sur la plaque de recouvrement (11) qui peut être fixée par son intermédiaire dans le perçage (5) du moyeu de la jante de la roue de secours, caractérisé par le fait que le dispositif d'ancrage (12) se compose d'une pièce de retenue (14) insérée dans la plaque de recouvrement (11) et comportant une bride de pose supérieure (16) et deux bras à écartement (17) s'étendant vers le bas, et d'une pièce de verrouillage (15) insérée dans celle-ci et comportant une bride circulaire supérieure (21) munie d'une poignée (22) et une came d'écartement inférieure ovale (24) qui lui est reliée par une entretoise (23), par l'intermédiaire de laquelle les bras à écartement (17) peuvent être écartés d'une quantité différente.

2.  Dispositif de recouvrement pour roue de secours selon la revendication 1, caractérisé par le fait qu'il est prévu sur les bras à écartement (17) qui s'étendent vers le bas des consoles (18) en avancée vers l'intérieur sur lesquelles font saillie vers le haut des tétons de guidage (19) qui coopèrent avec des rainures de guidage (25) prévues sur la came d'écartement ovale.

3.  Dispositif de recouvrement pour roue de secours selon les revendications 1 et 2, caractérisé par le fait qu'il est prévu sur une paroi latérale des rainures de guidage (25) de la came d'écartement ovale (24) plusieurs encoches d'encliquetage (26) par l'intermédiaire desquelles la pièce de verrouillage (15) peut être fixée dans différentes positions angulaires ou d'écartement, respectivement.

4.  Dispositif de recouvrement pour roue de secours selon les revendications 1 à 3, caractérisé par le fait que les bras à écartement (17) sont munis à leurs extrémités inférieures de surfaces de serrage en saillie (20) qui sont concaves et en forme d'arcs.

FIG.1

EP 0 200 812 B1

**FIG.2**

**FIG.3**

**FIG.4**

FIG.5

FIG.6